# EUROPEAN PATENT APPLICATION

(11) **EP 4 439 303 A1**
(43) Date of publication of application: **02.10.2024**
(21) Application number: 23164720.7
(22) Date of filing: 28.03.2023
(51) Int. Cl.: G06F 11/20, G06F 11/07, H04L 43/10

(54) **SAFE FAILOVER BETWEEN REDUNDANT CONTROLLERS**

(71) Applicant: ABB SCHWEIZ AG, 5400 Baden (CH)
(72) Inventor: JOHANSSON, Bjarne, 722 22 Västerås (SE); RÅGBERGER, Mats, 722 42 Västerås (SE)
(74) Representative: Kransell & Wennborg KB

(57) **Abstract**

A control device (220a) for use with at least one further control device (220b) in controlling an industrial system (210), to which the control device and further control device are connected via a data network (240). On the one hand, the control device is operable to function as primary controller, wherein it feeds control signals (110) to the industrial system. On the other hand, the control device is operable to function as a backup controller, wherein it routinely performs a failure detection on the primary controller via the data network, and transforms into primary controller in reaction to a positive failure detection. The transformation from backup controller into primary controller is conditional upon verifying that a node (230) in the data network appointed as network reference point, NRP, responds to a call from the backup controller. A malfunctioning NRP can be replaced with a different NRP candidate at runtime.

## Description

### TECHNICAL FIELD

The present disclosure relates to the field of redundant controller setups, with one active controller (primary controller) and one or more further controllers (backup controllers) that supervise the active controller and are ready to replace the primary controller if a failure is detected. In particular, there will be proposed a failover scheme which has a reduced exposure to the known, highly disruptive dual-primary condition.

### BACKGROUND

Control systems are becoming increasingly network-oriented. Control applications are envisioned to be executed in a broad range of targets, from today's embedded controller to industrial PC and edge devices and even in the cloud. Hence, the control system software should be as hardware-agnostic as feasible to broaden the range of deployment alternatives. The preferred communication means is switched Ethernet, and communication-dependent functionality, such as redundancy, should preferably rely on standard Ethernet networking only.

A standby controller redundancy solution consists of one active primary controller along with at least one passive backup controller. A standby redundancy solution requires the backup to detect that the primary has failed, thus a failure detection is needed. A failure detection should be hardware agnostic and only rely on networking solutions to maximize the deployment alternatives. One possible failure detection solution is to detect a heartbeat signal. A heartbeat failure detection means that the supervisee periodically sends a message to the supervising node. In the redundant controller context, the supervisee is the primary. The supervising node, the backup in the redundant controller context, expects to observe the heartbeat message within a known period. Discovering that heartbeats are missing for longer than a threshold/timeout causes the supervising backup controller to assume that the absence of heartbeats is due to a failure in the primary controller. A solution along these lines is disclosed in EP3933596A1.

However, the absence of heartbeats observable at the backup controller could also be caused by a network problem. The probability of network problems is typically reduced with redundant networks, but it is never zero. Hence, with conventional heartbeat-based failure detection, there is a non-zero probability that the system might face a dual primary situation due to networking problems.

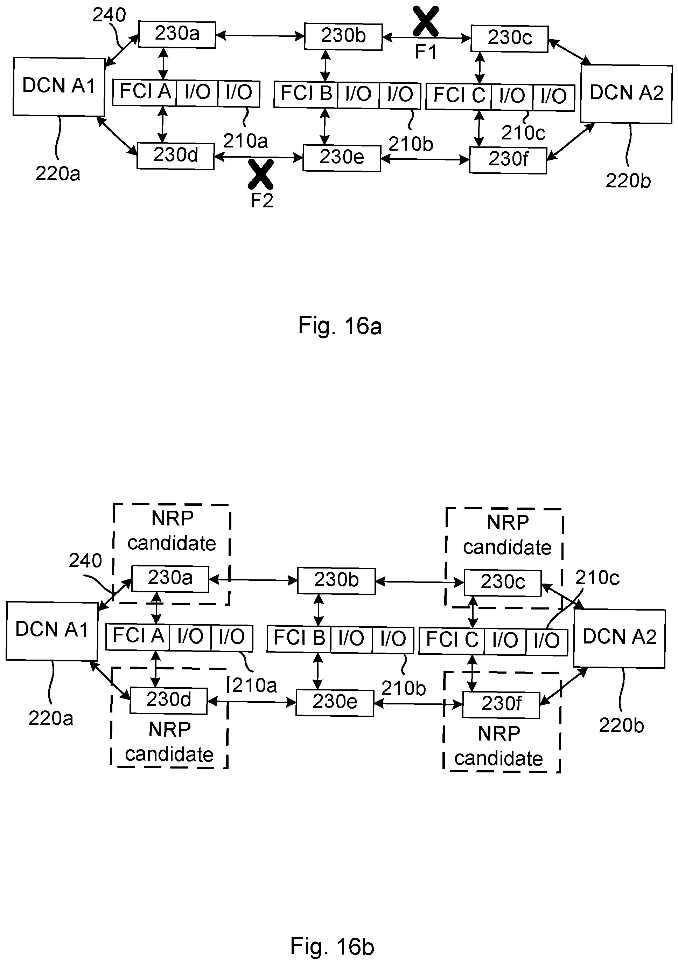

Figure 16A illustrates a deployment where one control device 220a (illustrated as a distributed control node, DCN) is acting as primary controller and a redundant further control device 220b is acting as backup controller. The primary controller is controlling an industrial system made up of components 210a, 210b, 210c (Fieldbus Communication Interfaces, FCIs) by feeding control signals to it via a network infrastructure comprising a number of switches 230. The primary controller is also emitting a heartbeat signal, which the backup controller monitors. When two indicated network failures F1, F2 occur, the heartbeat signal from the primary controller can no longer reach the backup controller, which may therefore erroneously conclude that it should assume the role as primary controller. The components 210a, 210b, 210c will then be receiving uncoordinated control signals from both control devices 220a, 220b. As a result of this *dual-primary condition,* the industrial system may end up in an inconsistent state, with downtime or material damage.

It would be desirable to avoid the occurrence of the dual-primary condition to the largest feasible extent. Each of US7986618B2 and US8082340B2 proposes ways of distinguishing between a link and a node failure, but these solutions make assumptions about the networks that cannot be generalized to all industrially relevant settings.

### SUMMARY

One objective of the present disclosure is to make available a decentralized arrangement of redundant control devices with a reduced risk that two control devices take on the primary controller role simultaneously (dual-primary condition). Another objective is to propose a control device for use with at least one further control device in controlling an industrial system over a data network with a reduced exposure to the dual-primary condition. Another objective is to propose a control device capable of a consistency-preserving failover decision (i.e., become primary controller) in limited time.

At least some of these objectives are achieved by the invention as defined by the independent claims. The dependent claims relate to advantageous embodiments.

In a first aspect of this disclosure, there is provided a control device for use with at least one further control device in controlling an industrial system (or general technical system), to which the control device and one or more further control devices are connected via a data network. The control device is operable to function as primary controller, wherein the control device feeds control signals to the industrial system, and as a backup controller, wherein the control device routinely performs a failure detection on the primary controller via the data network, and transforms into primary controller in reaction to a positive failure detection. According to the first aspect, the transformation of the control device from backup controller into primary controller is conditional upon verifying that a network node, which acts as network reference point (NRP), responds to a call from the backup controller.

In a second aspect of the present disclosure, there is provided an arrangement of control devices with the behavior according to the first aspect. Because of this behavior, the role as primary controller will be held by one of the control devices at a time or, exceptionally, by none of the control devices.

In a third aspect, there is provided a computer program containing instructions for causing a computer, or the control device in particular, to have the behavior according to the first aspect. The computer program may be stored or distributed on a data carrier.

In a fourth aspect, finally, there is provided a method of operating an arrangement of redundant control devices in controlling an industrial system, to which the control device and further control device(s) are connected via a data network. The method comprises: at a first control device currently functioning as primary controller, feeding control signals to the industrial system; at a second control device currently functioning as backup controller, routinely performing a failure detection on the primary controller; at the second control device, in reaction to a positive failure detection, making a call to a network node acting as network reference point (NRP); and at the second control device, deciding to transform into primary controller only if a response from the NRP is received.

The aspects of this disclosure outlined above are based on the inventors' realization that an important cause of the dual-primary condition is that - from the backup controller's perspective - a network failure cannot be reliably distinguished from a failure in the primary controller itself. The NRP, which can be any (existing or added) network node appointed for this purpose, is meant to provide an indication of the current health status of the network which allows the ambiguity as to whether an observed failure pertains to the network or the primary controller to be reliably settled. In particular, the reachability of the NRP may provide information on whether the network is affected by a failure that partition the network into one or more components. This information is helpful to decide whether a failover (or switchover or changeover, by equivalent terms) is adequate.

In some embodiments, the failure detection is based on a timestamped heartbeat signal. This, in some circumstances, renders the call to the NRP unnecessary, so that the changeover decision can be taken in shorter time. This is particularly useful in implementations where the data network runs a protocol that does not support pinging with a bounded response time.

In some embodiments, the control device is configured with an ability to replace a malfunctioning NRP with a different NRP candidate at runtime. This strengthens the reliability of the control device arrangement. In particular, the control device arrangement will remain functioning for longer periods of time on average and/or it may be more resilient to disturbances.

As used herein, a "data carrier" maybe a transitory data carrier, such as modulated electromagnetic or optical waves, or a non-transitory data carrier. Non-transitory data carriers include volatile and non-volatile memories, such as permanent and non-permanent storage media of magnetic, optical or solid-state type. Still within the scope of "data carrier", such memories may be fixedly mounted or portable.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, on which:
figures 1A to 1D are sequence diagrams showing an exchange of data between control devices, an industrial system and a network node appointed as NRP;
figures 2 and 3 show an arrangement of two redundant control devices according to the state of the art;
figures 4 to 15 illustrate how an arrangement of two control devices according to the present disclosure reacts to various situations;
figures 16A and 16B show an arrangement of two control devices, which are connected to an industrial system through network infrastructure; and
figure 17 is a state diagram illustrating the behavior of a control device according to the present disclosure.

### DETAILED DESCRIPTION

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of the invention to those skilled in the art. Like numbers refer to like elements throughout the description.

### Introduction

The Consistency, Availability, and Partition tolerance theorem (CAP theorem) states that in the case of partitioning, a distributed system can either be available or consistent, never both. See Gilbert and Lynch, "Brewer's conjecture and the feasibility of consistent, available, partition-tolerant web services", SIGACT News, vol. 33, no. 2 (June 2002), pp. 51-59, doi: 10.1145/564585.564601 and Brewer, "CAP twelve years later: How the 'rules' have changed", Computer, vol. 45, no. 2 (Feb. 2012), pp. 23-29, doi: 10.1109/MC.2012.37. Translated into the context of a distributed control system and controller redundancy, it means that in the case of partitioning, a dual-primary situation provides availability since both primaries supply output values. (As used herein, "partitioning" refers to the undesired splitting of the network into separate components due to a failure in a connecting network infrastructure.) However, since the primaries cannot synchronize due to the partitioning, they are likely to diverge into different states, providing mutually inconsistent outputs. In other words, in a redundant controller context, a conventional heartbeat-based failure detection provides availability but not consistency in the case of partitioning.

Supposing, instead, that the DCNs constituting the redundant pair would become passive in case of uncertainty of the state of the other, consistency can be expected to be preserved since the input/output interface would use a preconfigured default value (Output Set as Predetermined (OSP)) if the controllers do not provide any values.

The Network Reference Point Failure Detection (NRP FD) solution disclosed herein preserves consistency while minimizing the unavoidable availability remission that follows from the CAP theorem by prioritizing consistency over availability.

### Selection of the Network Reference Point (NRP)

The Network Reference Point (NRP) can be any device in a data network that does not have any common cause failures source shared with the supervisee besides from the data network itself. For example, the managed switch closest to the primary controller that fulfills the requirement of no common cause failure source can be appointed as NRP.

Since the network is typically redundant, there can be at least one potential NRP per network. In figure 16B, an annotated version of figure 16A, an example set of potential NRPs are denoted as NRP candidates. (In other examples, the switches 230b, 230e could be additional NRP candidates.) NRP candidates can overlap, i.e., primary and backup can have the same NRP candidate to propose. This would be the case when there is only one switch between the primary and the backup. It is the primary that proposes the NRP, and it proposes it from the NRP candidates. Whichever controller proposes a NRP candidate, the appointed NRP will be common to all controllers in the data network 240 which are configured for controlling the industrial system 210. (If a further industrial system is being controlled by a similar arrangement of redundant control devices, their NRP is appointed independently. This is valid also if the arrangement of redundant control devices is connected to the same data network 240.)

In some embodiments, the NRP is an (individually addressable) node in the data network which has been jointly appointed by the control devices as NRP. In some embodiments, a particular control device is configured to propose to the one or more further control devices, for appointment as NRP, a node in the data network with which the particular control device has no known common cause of failure. In some embodiments, additionally or alternatively, a particular control device is configured to propose to the one or more further control devices, for appointment as NRP, a node in the data network which is located on a path from itself to at least one further control device. This sequence of one control device proposing an NRP candidate and all further control devices accepting the NRP candidate as NRP is understood to be a joint appointment of the NRP.

### NRP-guided failure detection - overview

The NRP-guided failure detection algorithm (NRP FD) proposed herein may be described as is a heartbeat-based failure detection that, in addition to the heartbeat, uses the NRP. To be able to become and remain primary controller, the control devices 220 must be able to reach the NRP. Hence, using an NRP that is part of the already existing infrastructure, such as a switch, is beneficial. The role as NRP normally does not require any novel functionality from the node; responding to ping messages already forms part of network protocols supported by most commercially available network equipment.

The below describes the core of the NRP FD, first from a primary perspective, followed by the backup view. The following section describes the same thing on a more detailed level.

The primary controller selects NRP from its NRP candidates. The primary controller sends heartbeats to the backup. The heartbeat message may contain the IP address of the NRP, as shown in Table 1.

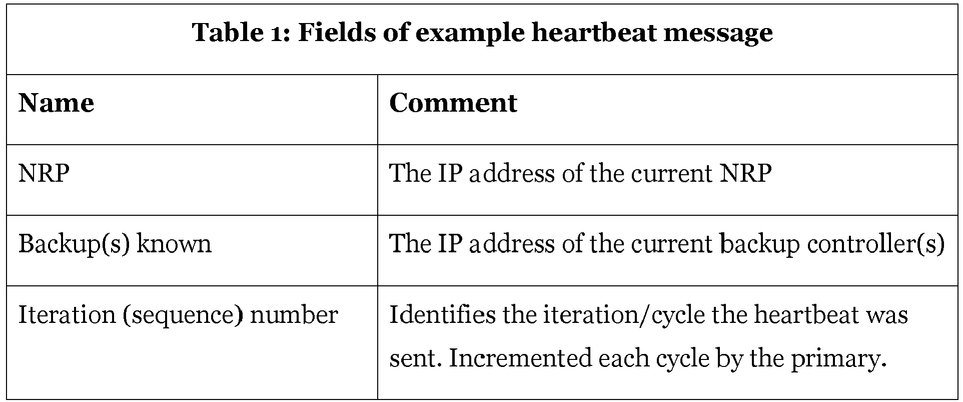

The iteration/cycle number can be replaced by a timestamp, and it is equivalent to a timestamp because the relationship between the iteration/cycle number and clock time can be worked out. The primary controller also monitors the NRP; if it cannot reach the NRP, it proposes a change. If the change request fails, the primary abandons the primary role by transforming into backup controller.

The backup controller monitors that it receives the heartbeat signal from the primary. If the heartbeat supervision determines a timeout, the backup controller checks whether the NRP is reachable; if the NRP is reachable, the backup becomes primary. The NRP reachability test can be made using an ICMP ping, such as ICMP Echo. ICMP ping does not have any hard real-time guarantees. The ICMP ping's lack of hard real-time guarantees can be mitigated by interpreting simultaneous silence as a primary failure rather than two network failures occurring simultaneously (which is improbable). In that case, a simultaneous silence would lead to the backup resuming the primary role directly without testing the NRP reachability. The drawback of interpreting a simultaneous failure as a primary failure is the potential of wrongly interpreting actual simultaneous network faults as a primary failure. Another way of working around the absence in a protocol of a ping with real-time guarantees is to configure the network node serving as NRP accordingly; this is likely to increase the total implementation cost and/or reduce the number of nodes that are eligible as NRP, but it may be the best option if a high responsiveness (fast failover) is desired.

In the present disclosure, the term NRP Ping is used for the NRP reachability check. In the situation where only one network (alternative terminology: only one network path) remains, and there is no other way than to use the NRP Ping to become primary, the backup can indicate this situation. However, this is optional and can depend on failover time requirements.

The NRP FD can be advantageously implemented in such data networks where some of the nodes, in particular the switches, support hard real-time NRP Ping (ping with bounded response time). This currently is not available in all relevant types of industrial control networks. The hard real-time low latency NRP Pings could potentially lower the NRP Ping test time from 5-20 ms using ICMP ping to less than one millisecond. Such real-time NRP Ping could also be utilized by a link supervision mechanism similar to Bidirectional Forwarding Detection (BFD) in order to provide a real-time link failure mechanism. A real-time link failure detection mechanism could be useful in operational-technology (OT) networks deployed for other purposes than redundancy; one envisioned use case may be network supervision.

### NRP-guided failure detection - state-machine description

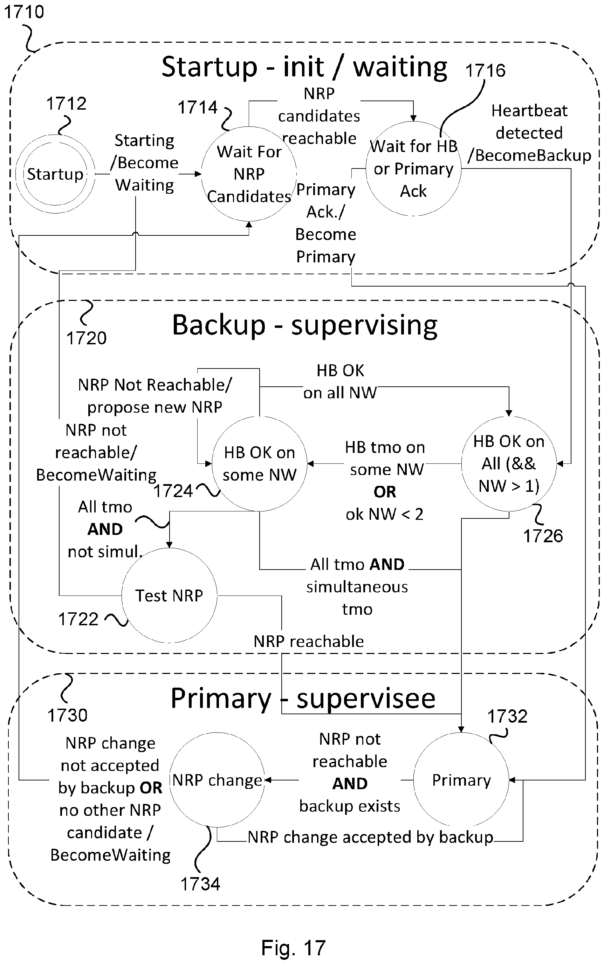

The NRP FD is illustrated by the state machine diagram in figure 17. In figure 17, the abbreviation "tmo" signifies timeout and the variable "NW" represents the number of different networks (paths of the network) on which the backup controller monitors the heartbeat signal.

The main states are Startup-Initialization/Waiting 1710, Backup-Supervising 1720 and Primary-Supervisee 1730, and the initial substate is indicated by 1712. A control device which operates in any of these states has a deterministic behavior. A control device in the Startup-Initialization/Waiting state 1710 cannot be characterized as either primary controller or backup controller but will typically be differentiated into one of these on the basis of received signals or timeouts or a combination of these.

The Startup-Initialization/Waiting state 1710 starts with a wait for NRP candidates (state 1714). The wait for NRP candidates is followed by a wait for acknowledgment to become primary or a heartbeat from another primary (state 1716). The control device will decide to function as primary controller if an acknowledgment of being primary is received. The primary acknowledgment is issued by an operator, system owner or other person that oversees the system. In normal circumstances, there shall be at most one primary controller for each industrial system to be controlled. An NRP is selected from the NRP candidates when entering the primary role.

The control device decides to function as backup controller if a heartbeat is observed from an existing primary. A backup announces its presence to the primary, and it does not become a backup that is ready to take over until it sees its own IP address in a heartbeat from the primary. The primary confirms that it is aware of the backup presence by sending the backup controller's IP address in a heartbeat messages; see the example message format in Table 1.

The behavior is summarized by the pseudocode in Table 2.

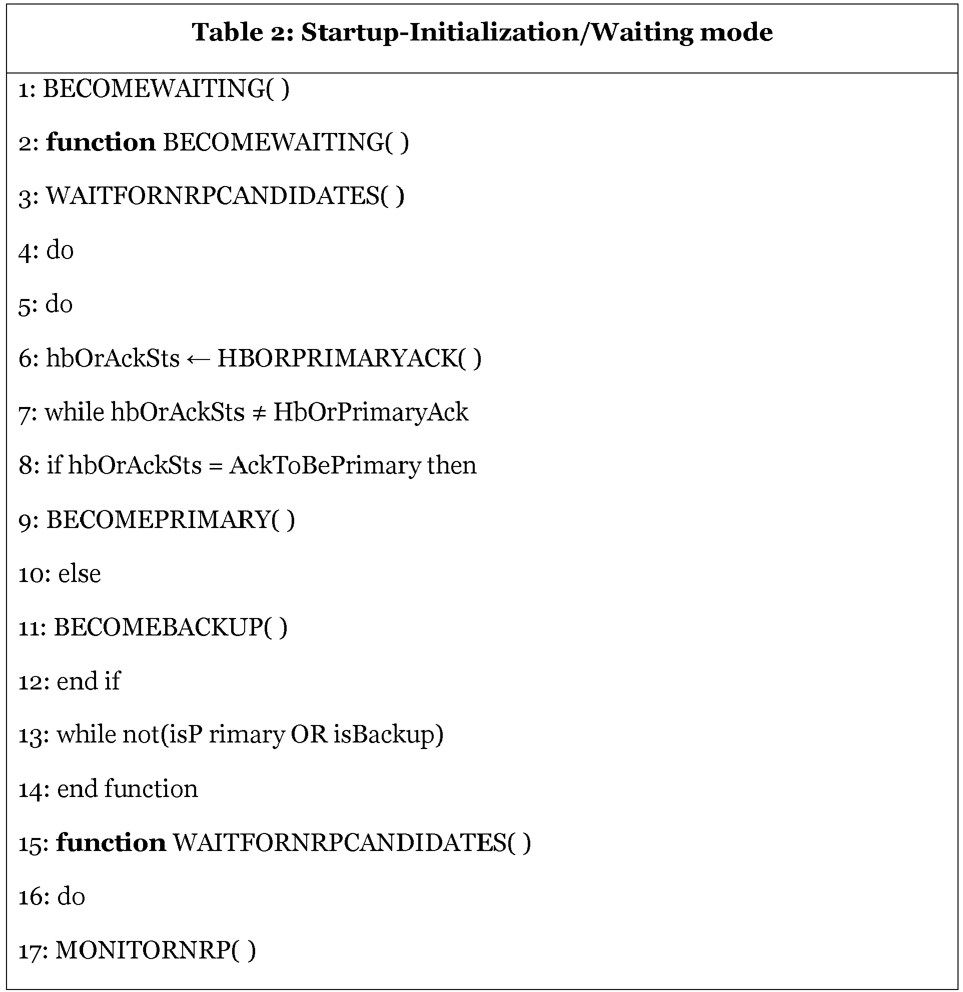

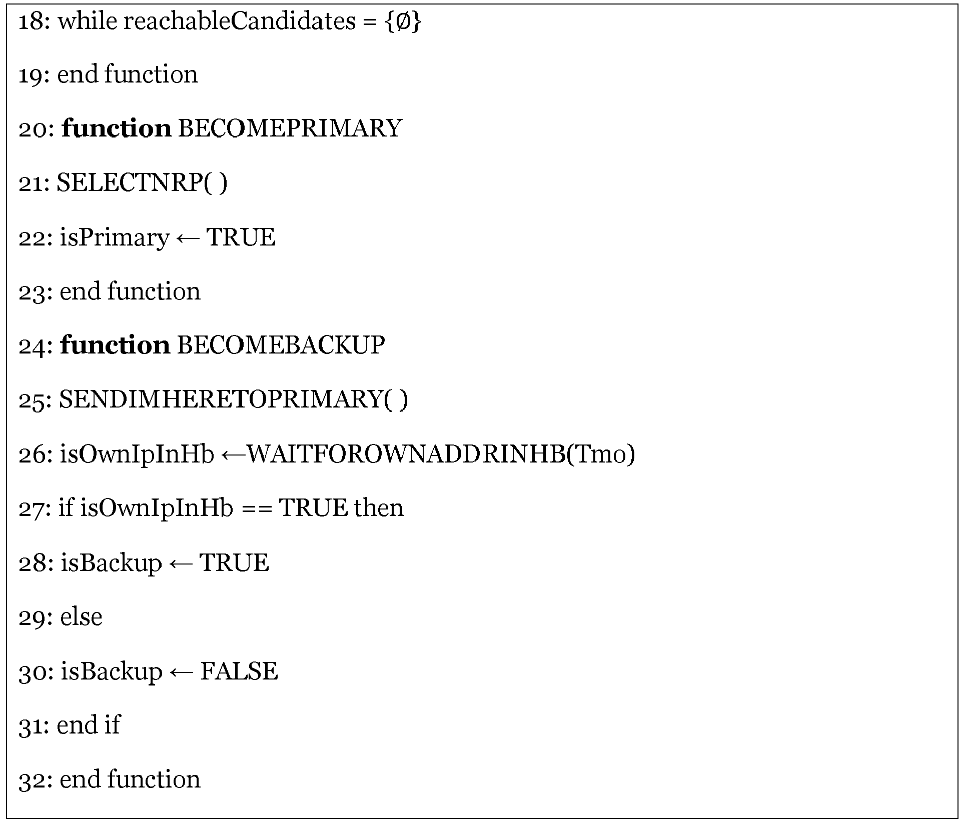

The monitoring/detection of NRP candidates on a high level is summarized by the pseudocode in Table 3.

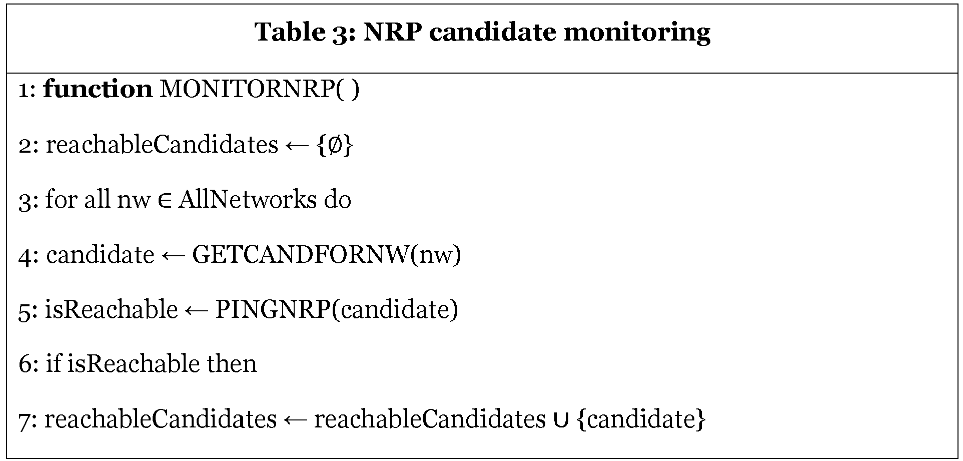

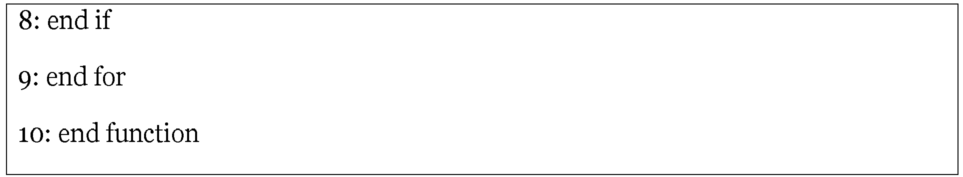

This behavior is common to all the states 1710, 1720, 1730. More precisely, the NRP candidates are monitored, and a set containing the reachable NRP candidates, *reachableCandidates,* is maintained. The NRP selection may be performed by selecting an NRP from this set. The *reachableCandidates* set may be updated periodically, for example, a few times per minute. In implementations where multiple networks (network paths) are utilized, each network has an NRP candidate. The function *GetCandForNw*() fetches NRP candidates for a specific network, and *PingNRP*() makes a call to the NRP; it may be implemented as an ICMP Ping or a real-time ping.

A control device in the Backup-Supervising state 1720, performs supervision of the primary controller. For one industrial system to be controlled, there can be multiple backup controllers. The behavior of the backup controller is summarized by the pseudocode in Table 4.

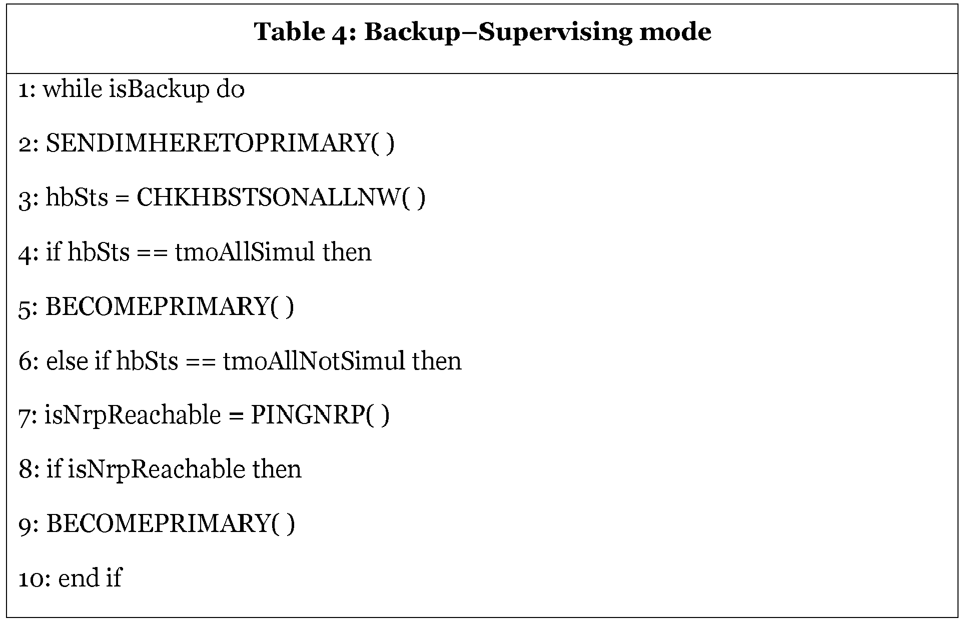

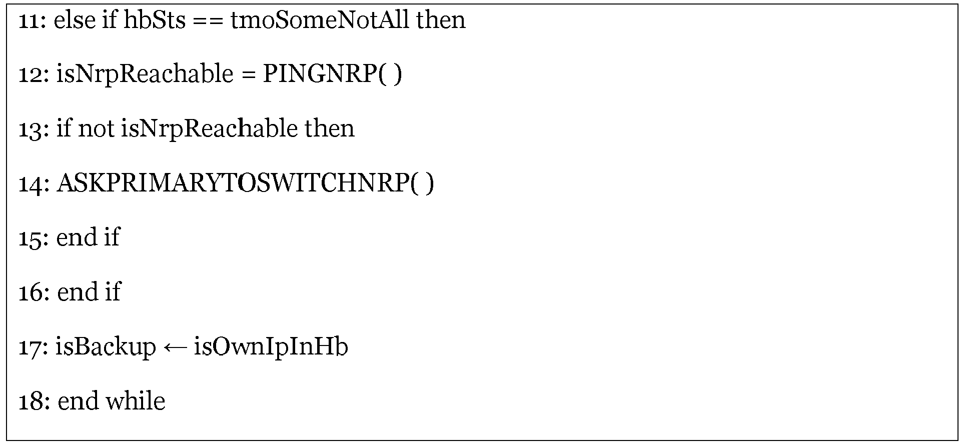

In the implementation according to this pseudocode, the backup controller continuously reports its presence to the primary controller since the primary needs to know whether the backup is present in case the primary cannot reach the NRP. The function *ChkHbStsOnAllNw*() checks the heartbeat status on all networks (network paths) where a heartbeat is expected. The function returns *tmoAllSimul* if it finds a simultaneous timeout on all networks (network paths); it returns *tmoAllNotSimul* if the heartbeat has timed out on all networks (network paths) but not simultaneously; finally the function returns *tmoSomeNotAll* if the backup controller detects heartbeats on some networks (network paths) but not all, which could suggest that a partition has occurred.

In state 1726, the heartbeat status is checked for each network (each network path). It is assumed that the heartbeat signal has a timeout on all networks (network paths) that connect the primary and backup, and it is a simultaneous timeout on two or more. In this case, the primary state could be entered directly without an NRP test, since it is likely that the silence is due to a failure of the primary and not a simultaneous network failure. However, this execution path could be skipped to solely rely on the NRP Ping if it is deemed that the NRP Ping fulfills the real-time properties needed. This is also the preferred solution, and the only solution that completely eliminates the risk of dual-primary. If the simultaneous timeout is used, the risk of the above-described dual-primary condition is reduced, though not necessarily down to zero.

State 1724 corresponds to a finding that the heartbeat is missing on some but not all networks (network paths). Then, the NRP reachability is tested (state 1722) since silence could mean network breakage between the backup controller and the NRP itself. If a backup controller discovers that the NRP is not reachable, that backup controller could optionally propose to the controller a replacement of the NRP.

A control device in the Primary-Supervisee state 1730 may have a behavior in accordance with the pseudocode in Table 5.

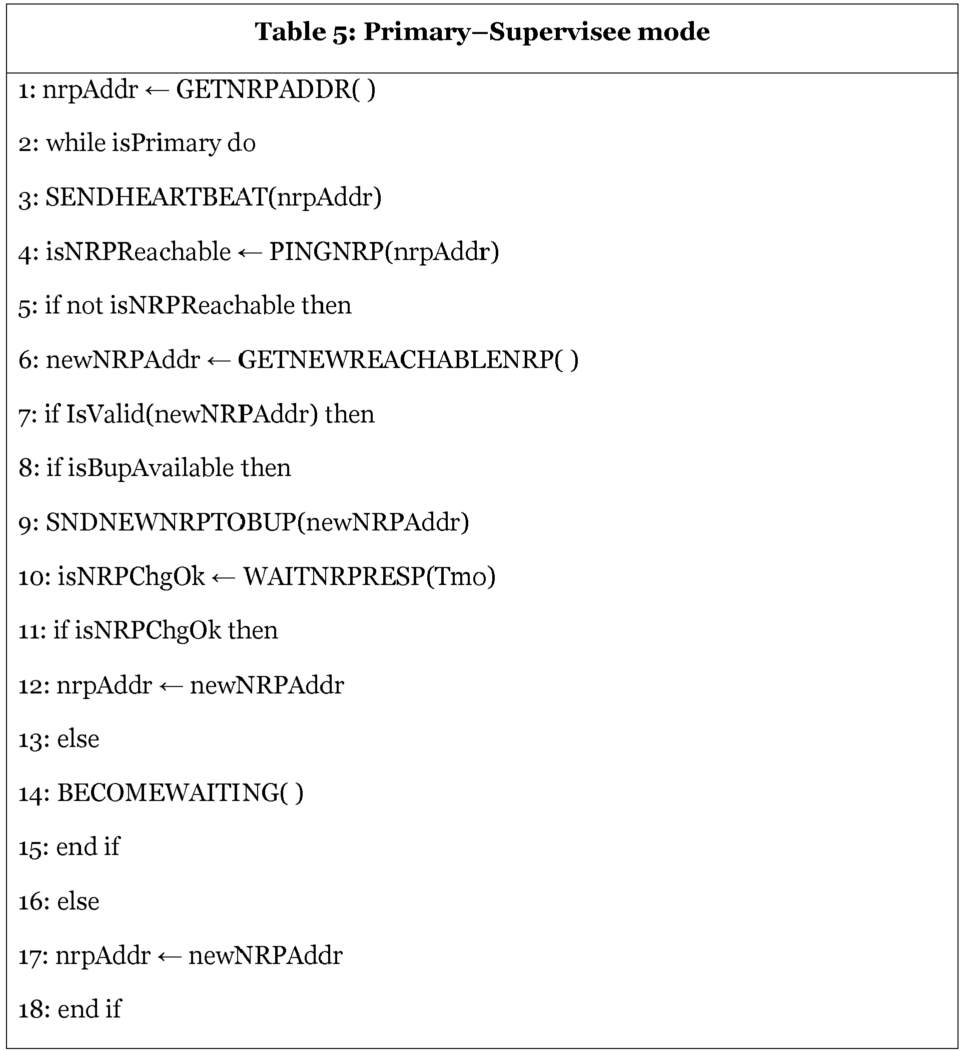

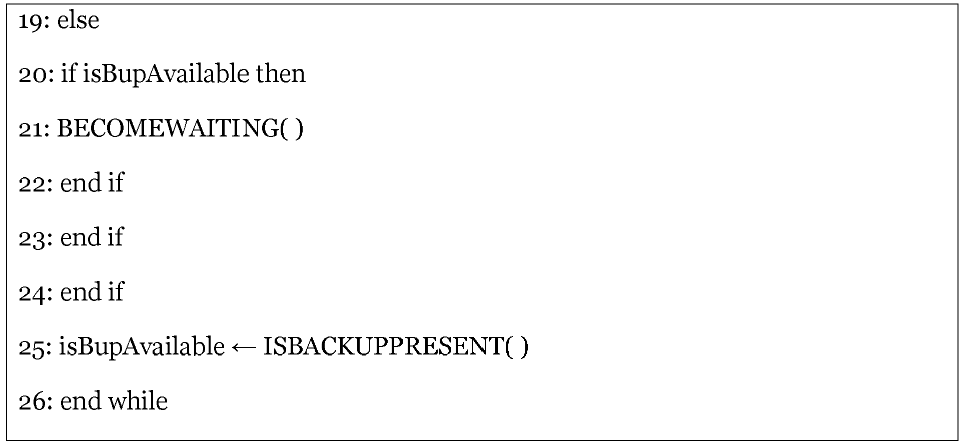

Initially, in state 1732, the heartbeat signal is sent in every iteration/cycle. The heartbeat signal may contain messages which state the IP address of the NRP, among other things; see Table 1.

After this, the NRP reachability is tested, and if the NRP is reachable, the execution proceeds.

However, if the NRP is not reachable, the primary controller proposes a switch of NRP if backups are available (state 1734). If no backups are present, the primary just switches NRP, assuming that it has available NRP candidates that are reachable on another network. If a backup is present, the primary sends the request to change NRP to the backup and waits a limited time for a response. If the change is positively acknowledged, the primary controller changes NRP. The change has effect on all the controllers in the network. Otherwise, if a negative response or no response is received, the primary can no longer be primary, and enters the Startup-Initialization/Waiting state 1710 again.

### Implementation aspects

NRP devices: As mentioned, the preferred choice for the actual NRP is equipment already included in the data network. Switches that are a part of the network infrastructure is such an example. Selecting another device as NRP, a device not part of the infrastructure interconnecting the primary and backup, would tend to influence reliability/availability negatively, namely, since this extra equipment also needs to be functioning for the redundant pair to be available.

NRP reachability test / NRP Ping: Today's managed commercial off-the-shelf (COTS) switches typically support a ping message compliant with the Internet Control Message Protocol (ICMP) specification. An ICMP Ping can be used as the NRP Ping. However, as mentioned, an ICMP Ping has no hard real-time guarantees. Empirical tests show that the reply time can range from below milliseconds to a few milliseconds, such as up to 5 ms. To achieve lower latency and hard real-time guarantees, one may consider adding hard real-time 'ping function' support to existing switches. A real-time ping could guarantee a low latency and bounded response time.

Discovery and selection of NRP candidates: NRP FD can discover the NRP candidates using a predefined configuration. Another dynamic approach could be to use the Link Layer Discovery Protocol (LLDP). Most managed switches support LLDP to announce their presence to neighboring devices. With this information, the distributed control node (DCN) constituting the redundant pair could map out the topology between them and dynamically select their NRP candidates.

### Examples

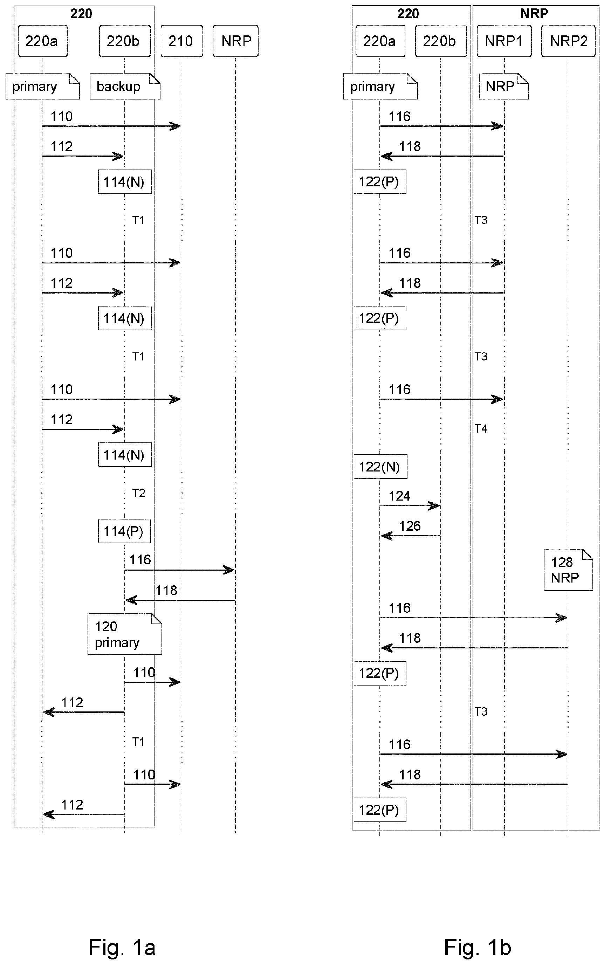

Figures 1A to 1D are sequence diagrams showing an exchange of data between control devices 220, an industrial system 210 and a network node NRP appointed as NRP in a number of example scenarios. It is understood that these entities are interconnected via at least one data network 240, which is preferably a wired data network. The data network 240 may have a mesh topology. It is assumed, further, that the control devices 220a, 220b operate in a decentralized way, that is, without any assistance from an actively coordinating central entity.

In figure 1A, the first control device 220a is functioning as primary controller and the second control device 220b is functioning as backup controller. As mentioned above, the initial assignment of roles may have been established initially by means of a primary acknowledgement issued by an operator. For simplicity, this and the further examples to be described refer to a one-out-of-two (1002) setup, where one is primary and one is backup, although it is appreciated that the proposed solution can be readily adapted to deployments with multiple backup controllers. Accordingly, the primary controller 220a feeds control signals 110 to the industrial system and emits heartbeat messages 112 which can be monitored by the secondary controller 220b. Receipt of a heartbeat message 112 in an expected time interval, e.g. at most a preconfigured period T1 after the previous heartbeat message, allows the backup controller 220b to make a negative failure determination 114(N). If however, a heartbeat message has not been received after T2 units, where T2 > T1, the backup controller 220b makes a positive failure determination 114(P).

The second control device acting as backup controller 220b then makes a call 116 to the NRP, such as a ping. If it receives a response 118, it is safe to conclude that the absence of the expected heartbeat message 112 was not due to an error in the data network 240 but more likely to a failure of the first control device 220a. The second control device thus transforms from backup controller into primary controller (step 120). After the transformation, it will be the second control device 220b that feeds control signals 110 to the industrial system and emits heartbeat messages 112 every T1 time units. If the first control device 220a becomes operational again, it can monitor the heartbeat messages 112 and use them as basis for a recurring failure detection of the second control device 220b.

An effect of these last steps is that the backup controller's transformation into primary controller is conditional upon verifying that a network node acting as network reference point (NRP) responds 118 to the call 116 from the backup controller. In other words, the backup controller is configured not to transform into primary controller without detecting the response 118 unless exceptional circumstances are at hand; rather, it remains backup controller in absence of the response 118. It is generally true that, the transformation into primary controller is not conditional upon the response 118 having any specific content; this means that any network node capable of responding to any type of ping or ping-like message is eligible as NRP, a low requirement which could greatly simplify implementations.

An example of exceptional circumstances may be that the backup controller detects a simultaneous interruption of the stream of timestamped heartbeat messages 112 on at least two different paths of the data network 240. Such detection is possible, in particular, if the primary controller 220a emits the heartbeat signal in the form of timestamped broadcast/multicast messages (like in Table 1); the detection is also possible if the primary controller 220a sends two streams of timestamped unicast messages directed to the backup controller with different routings. If the backup controller detects a simultaneous interruption of the stream of timestamped heartbeat messages 112 on at least two different paths of the data network 240, it may transform into primary controller regardless of whether it receives a response from the NRP; practically speaking, the backup controller does not wait for the NRP to respond until the end of the timeout period.

In embodiments where multiple control devices functioning as backup controller supervise the control device which functions as primary controller, the backup controllers may be making one call 116 each to the NRP. The equivalent basic configuration of the active control devices in the data network 240 may lead to that the backup controller which first receives a response 118 to its call 116 will transform into primary controller, but each of the remaining backup controllers will remain a backup controller. In implementations where the call 116 is of a message type specifically defined for this purpose (e.g., a specialized type of ping), the NRP may be configured with an embargo period such that after having responded to a first call 116, it does not reply to the second, third and further calls 116 until the embargo period has expired. This could limit the risk of a dual-primary condition. Alternatively, the NRP is configured to respond to each incoming call 116 but indicate in the response 118 whether it has responded to another call 116 in the recent past (e.g., a time period comparable to the embargo period); this will allow a backup controller that receives a response 118 with a positively valued such indication to voluntarily refrain from transforming into primary controller.

In the embodiment illustrated in figure 1A, the backup controller 220b routinely performs the failure detection by listening to a periodic heartbeat signal. It is noted that, in implementations where the heartbeat signal is used for additional purposes, the backup controller's 220b listening periodicity could be lower than the periodicity of the heartbeat signal. In further embodiments, the backup controller 220b may perform the failure detection by making calls to the primary controller 220a (e.g., status poll), on a periodic, scheduled or event-triggered basis.

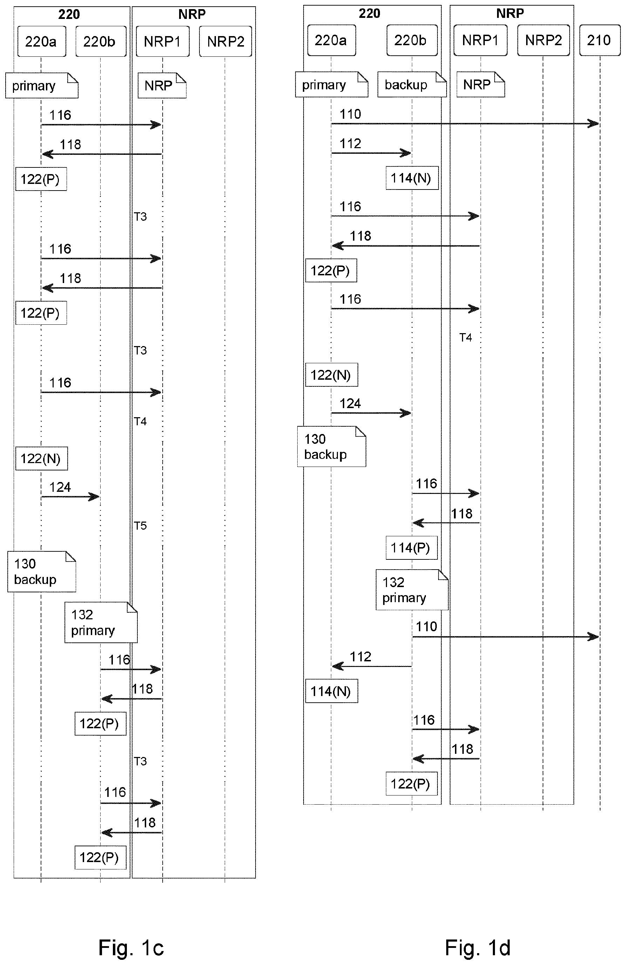

Figure 1B illustrates the maintenance of the NRP by the primary controller 220a, and the process for appointing a replacement NRP. For simplicity of the presentation, the exchange of messages between the primary controller 220a and the industrial system 210 is merely implicit in figure 1B; reference is made to figure 1D for a more complete description. Initially, a network node NRP1 functions as NRP. As such, the control device 220a which functions as primary controller routinely verifies that NRP1 responds 118 to a call 116. If the response 118 is received, it makes a positive verification decision 122(P) and otherwise a negative verification decision 122(N). In the illustrated embodiment, a new call 116 is sent with a periodicity of T3 time units; alternatively, the call 116 may follow a preconfigured time schedule or the call 116 may be triggered by an event observable by the control device 220a which functions as primary controller. In figure 1B, because no response 118 is received after T4 time units (timeout period), a negative verification decision 122(N) is made. The primary controller 220a then sends a proposal 124 for replacement NRP (here: NRP2) to the backup controller 220b. The backup controller 220b - possibly after verifying that it receives a response to a call to the proposed replacement NRP - sends an acceptance 126 to the primary controller 220a. This corresponds to an appointment 128 of NRP2 as new NRP. Thus, the primary controller 220a will instead direct its routine calls 116 to NPR2. Further, the backup controller 220b, if later it makes a positive failure detection on the primary controller 220a, will check whether NRP2 responds before the backup controller 220b transforms into primary controller. In some embodiments, the backup controller routinely checks whether the NRP responds to a call from the backup controller, i.e., not only when it has made a positive failure detection on the primary controller.

Hypothetically, if instead the backup controller 220b had not accepted the proposal to use NRP2 as replacement NRP (i.e., by not sending an acceptance within a pre-agreed delay), the primary controller 220a could have proposed 124 a different replacement NRP.

The scenario in figure 1C is initially identical to that in figure 1B. However, the backup controller 220b does not, in a period of T5 time units exceeding a preconfigured timeout duration, send any acceptance of the primary controller's 220a proposal 124 for replacement NRP. It is understood that the primary controller 220a has no further NRP candidates to propose. In this scenario, the configuration of the control devices will cause the first control device 220a to transform 130 from primary controller to backup controller and the second control device 220b to transform 132 from backup controller to primary controller. Thus, the second control device 220b will send calls 116 to NPR1 and routinely verify 122 that NPR1 sends responses 118. The second control device 220b will also be in charge of controlling the industrial system 210, although this is not explicit from figure 1C.

In the interval between the first control device's 220a transformation 130 from primary controller to backup controller and the second control device's 220b transformation 132 from backup controller to primary controller, both control devices 220a, 220b will be functioning as backup controller. This dual-backup condition is not a harmful condition, particularly if the industrial system 210 (or an input/output interface thereof) is configured to apply a predetermined control signal value (Output Set as Predetermined, OSP) in the absence of an external control signal. The OSP signal will steer the industrial system 210 towards a safe - though not necessarily useful or productive - condition.

In figure 1D, initially, the first control device 220a functions as primary controller, the second control device 220b functions as backup controller, and NRP1 has been appointed as NRP. In the illustrated embodiment, the periodicity T1 of failure detection 114 and the periodicity T3 of verifying 122 that the NRP responds are equal. One cycle of orderly operation is shown, where the primary controller feeds control signals 110 to the industrial system 210, a heartbeat message 112 to the backup controller 220b, and a call 116 to the NRP for verifying that the NRP is operating. This will cause the backup controller 220b to make a negative failure detection decision 114(N), and it will cause the NRP to send a response 118, which allows the primary controller 220a to conclude that the NRP is operating, decision 122(P).

In a next cycle, however, the NRP does not respond to the primary controller's 220a call 116 for T4 time units. The primary controller 220a makes a negative verification decision 122(N) and proposes 124 the node NRP2 as replacement NRP to the backup controller 220b. The backup controller 220b turns the proposal down implicitly by not accepting in T5 units of time. As a result, the first control device 220a transforms 130 from primary controller into backup controller and therefore stops sending heartbeat messages 112. Then, the second control device 220b, after verifying that NRP1, still appointed as NRP, responds 118 to a call 116, take a positive failure decision 114(P) and transform 132 into primary controller.

In the next cycle, the second control device 220b feeds control signals 110 to the industrial system 210, a heartbeat message 112 to the first control device 220a (which is either out of order or functioning as backup controller 220b), and makes a call 116 to verify that NRP1 is operating. If NRP1 responds 118 to the call 116, the second control device 220b can conclude 122(P) that NRP1 is a valid NRP and need not propose any replacement until further notice.

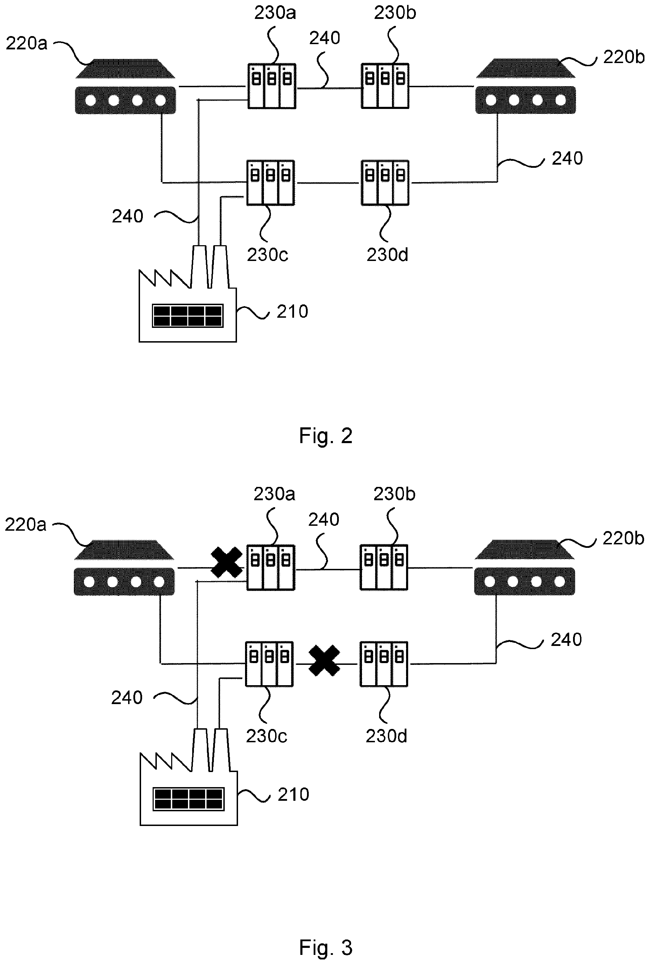

Figures 2 to 15, where same reference numbers are used as in figure 16, show an example network topology and various locations of failures that could appear therein.

Starting with the state of the art situation, figure 2 shows an arrangement of two redundant control devices 220a, 220b not configured according to the complete teachings of the present disclosure. When one of the control devices 220a, 220b functions a primary controller, it feeds control signals to the industrial system 210 via the data network 240 and one or more of the switches 230a, 230b, 230c, 230d arranged therein. The first control device 220a may send a control signal to the industrial system 210 via a first path including the upper left switch 230a or via a second path including the lower left switch 230c. The second control device 220b for its part may send a control signal to the industrial system 210 via a first path including the two upper switches 230a, 230b or via a second path including the two lower switches 230d, 230c. The sending control device may be able to influence the routing of a control signal, or this can be left up to the network infrastructure (including the switches 230) to decide.

It is furthermore noted that the first and second control devices 220a, 220b in figure 2 are connected, on the one hand, by an upper path through the upper network switches 230a, 230b and, on the other hand, by a lower path through the lower network switches 230c, 230d. The first and second control devices 220a, 220b each have one port terminating the upper path and one port terminating the lower path. In this sense, the port is equivalent to one routing between the first and second control devices 220a, 220b. The ports may have different IP addresses, or the network protocol may allow the ports to be addressed individually by other means.

Figure 3 depicts a scenario where the data network 240 has two failures, as indicated by the red marks. The failures break the first but not the second path from the first control device 220a to the industrial system 210. The failures also break all paths between the first control device 220a (primary controller) and the second control device 220a (backup controller), so that the backup controller may erroneously conclude that it should transform into primary controller. This will lead to the undesirable dual-primary condition if the control devices 220a, 220b are configured according to the state of the art.

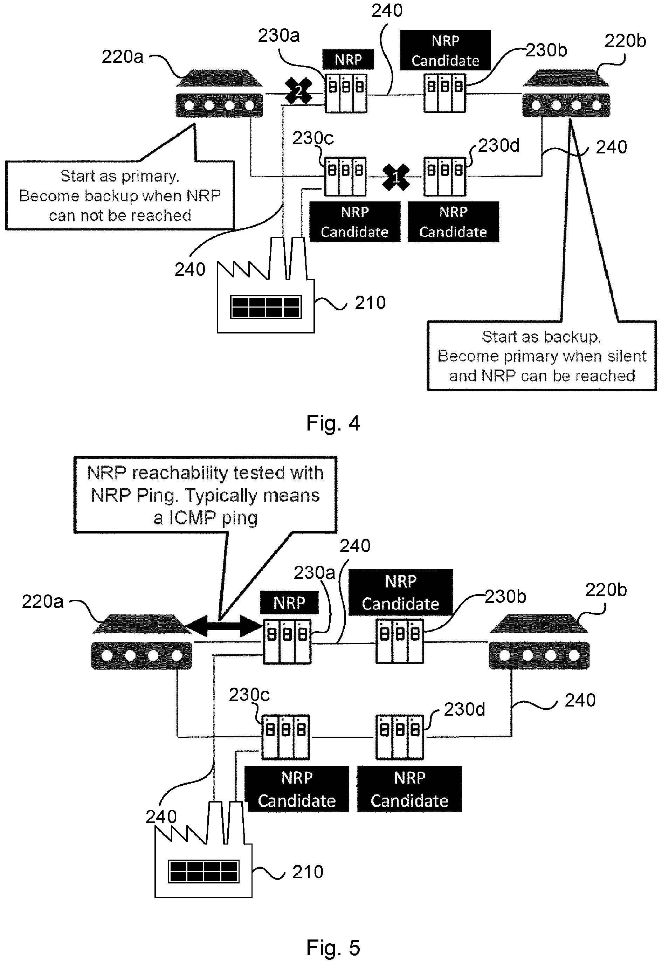

Turning to figure 4, if instead the control devices 220a, 220b are configured according to the present disclosure and have jointly appointed an NRP, the risk of the dual-primary condition is much reduced. The first control device 220a starts as primary controller. It transforms into backup controller when, due to one of the network failures, the NRP cannot be reached. Meanwhile, the second control device 220b starts as backup controller and becomes primary controller when the first control device 220a appears to be silent and the NRP can be reached. The indicated NRP candidates need not be involved in this scenario. For details on the signaling, reference is made to the sequence diagram in figure 1A.

In figure 5, a link between the first control device 220a and the upper left switch 230a which functions as NRP is indicated. The reachability of the NRP can be verified by sending a ping (NRP ping) on this link. The ping may be compliant with the ICMP, which is not implemented in hard real-time equipment, so that no bounded response time is guaranteed. As explained above, this drawback can be compensated to some extent by monitoring the heartbeat signal over two different network paths, such as the upper and lower paths between the first and second control devices 220a, 220b described with reference to figure 2, and judging whether the timeout is contemporaneous. It is understood that the switches 230 are configured to forward (pass on) the heartbeat signal, whereas the control devices 220 normally are not.

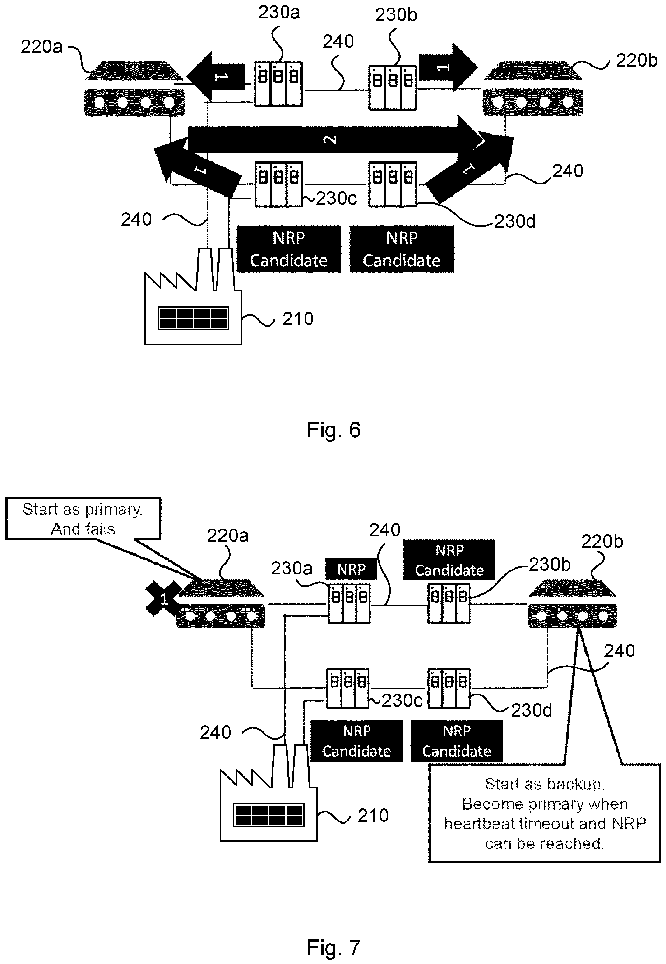

In some embodiments, as shown in figure 6, each device connected to the data network 240 can learn the IP address of its closest switch 230 through the LLDP protocol at startup. Indeed, under LLDP, each switch 230 announces itself periodically (signals 1), using a standardized protocol that most commercially available network equipment supports. Further the LLDP may provide information for determining whether the switch 230 supports a real-time ping, i.e., not just ICMP ping. The control device 220a which functions as primary controller announces its NRP to the backup controller (signal 2); this announcement may optionally be included in the heartbeat signal, as per Table 1. If no NRP is successfully appointed, a system owner can be informed accordingly through any suitable diagnostic functionality associated with the data network 240.

In the scenario of figure 7, the first control device 220a start as primary controller and has a failure preventing it from sending control signals to the industrial system 210. The data network 240 functions normally. The second control device 220b starts as backup controller, and it transforms into primary controller after noting that a heartbeat timeout period has expired and that the NRP can be successfully reached. The end result of these events is that the former primary controller is silent, e.g. in an error state or powered off, and the former backup controller functions as primary controller.

Alternatively, if the second control device 220b detects the heartbeat messages from the first control device 220a over the upper and lower paths, which have no common cause of failure, the second control device 220b can transform into primary controller as soon as it determines, e.g. based on timestamps, that the heartbeat timeout is simultaneous on both paths. It would be very unlikely that the absence of heartbeat messages is due to two network failures - one on each path - which arise approximately simultaneously. The NRP check than thus be omitted without detriment.

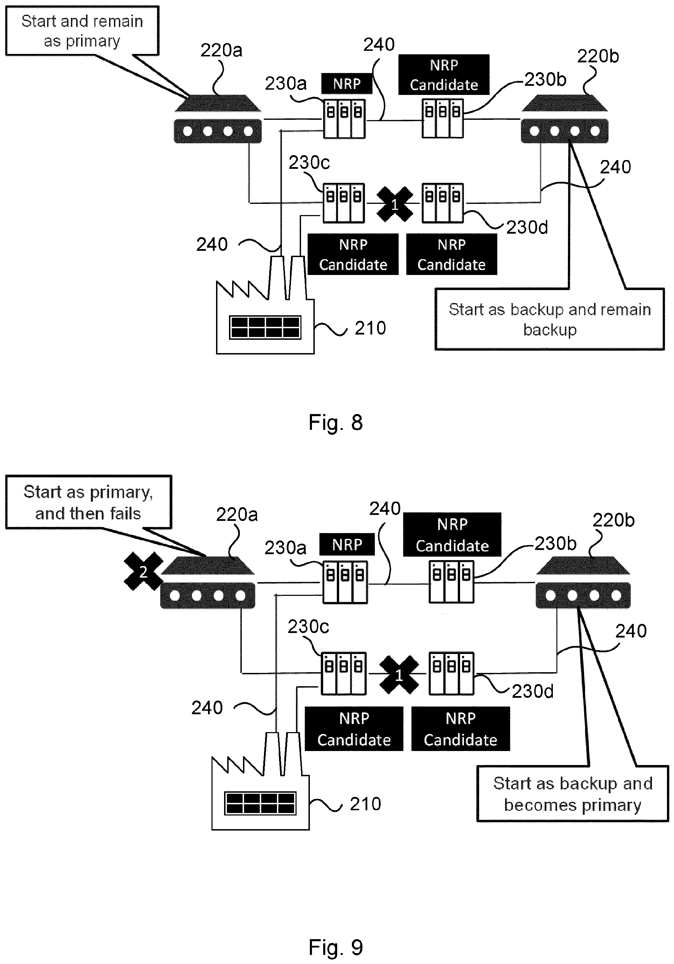

In figure 8, the first control device 220a starts as primary controller and the second control device 220b starts as backup controller. Later, a network failure 1 occurs at the indicated position, which breaks the lower path but does not affect the primary controller's ability to feed the control signals to the industrial system 210. Because of the redundancy, the backup controller will keep receiving the heartbeat messages over the upper path; the network failure may not be noticed by the backup controller and it does not necessarily trigger any action in the backup controller.

Figure 9 is a continuation of the scenario of figure 8. Here, if the primary controller later has a failure 2 that stops it from sending control signals to the industrial system 210, then this will be noticed by the backup controller after the timeout period. Because the backup controller will receive a response from the NRP - over the upper path more precisely - it will decide to transform into primary controller.

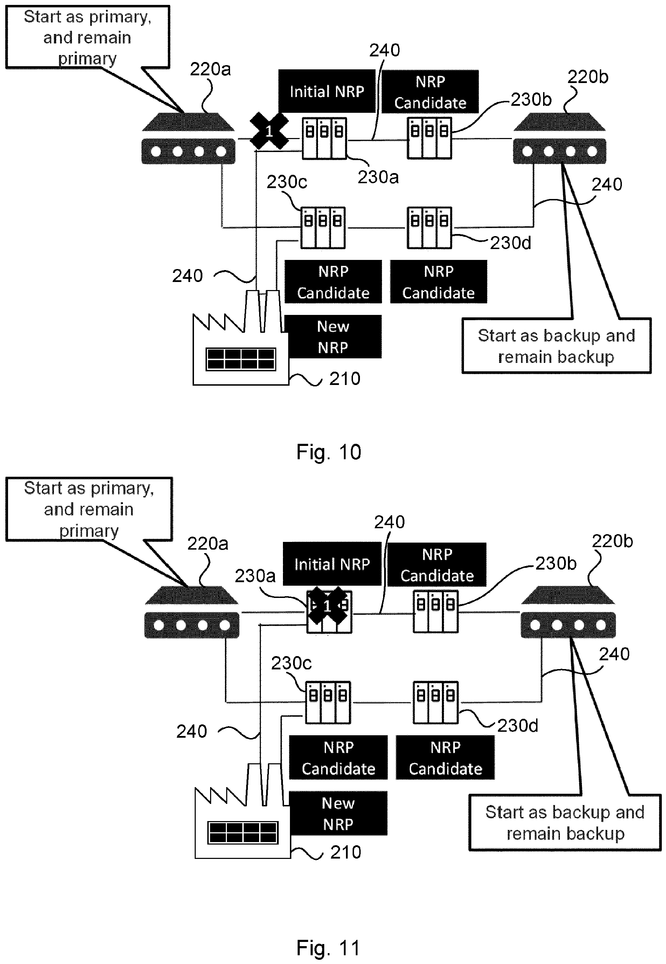

In figure 10, the first control device 220a starts as primary controller and the second control device 220b starts as backup controller. A network failure 1 occurs at the indicated position, which breaks the upper path and also breaks the link between the first control device 220a and the upper left switch 230a, which functions as NRP. The first control device 220a (primary controller) will react by proposing one or more NRP candidates, which the second control device 220b can either accept or (implicitly) reject. If it turns out that the lower left switch 230c is acceptable, it will be appointed as NRP with effect for the first control device 220a and the second control device 220b.

In figure 11, the first control device 220a starts as primary controller and the second control device 220b starts as backup controller. This time the upper left switch 230a, which has been appointed as NRP, stops functioning. The malfunctioning of the NRP will be discovered by the primary controller during its routine verification (cf. figure 1B). The primary controller proposes the lower left switch 230c for appointment as replacement NRP, and this is accepted by the backup controller. There is no change in the primary/backup roles.

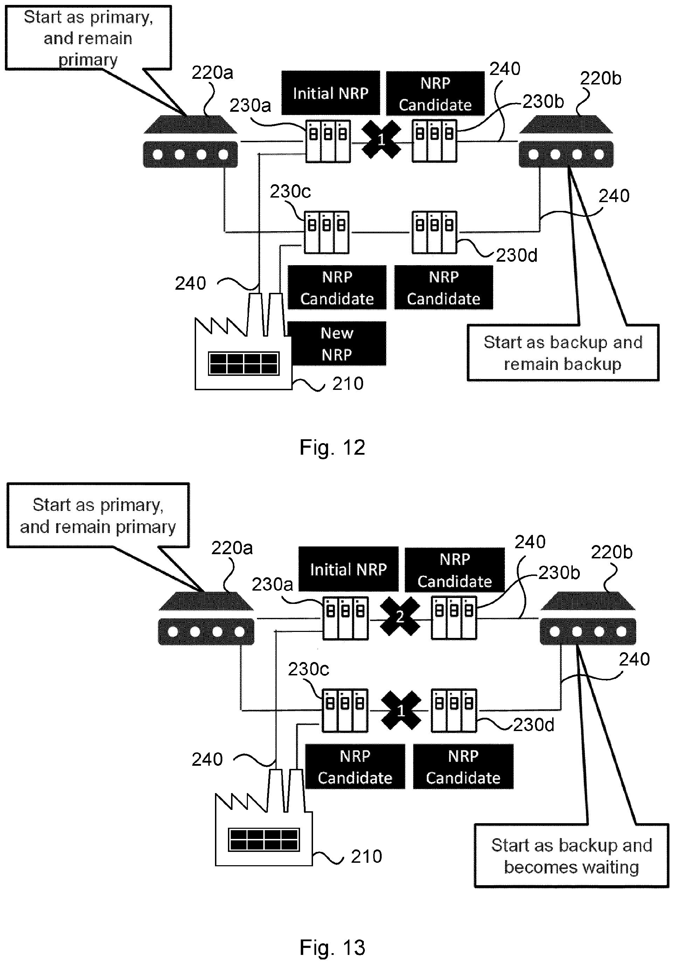

In figure 12, the first control device 220a starts as primary controller and the second control device 220b starts as backup controller. The upper left switch 230a is appointed as NRP. A network failure 1 occurs at the indicated position, which breaks the upper path between the first control device 220a and the second control device 220b, but leaves the lower path intact. However, the network failure 1 breaks the only path from the NRP to the second control device 220b (backup controller). In the present embodiment, the backup controller routinely verifies that the NRP is reachable. Because this verification leads to a negative result, because of the network failure 1, the backup controller requests the primary controller to replace the NRP. Formulated differently, the upper left switch 230a is no longer an acceptable NRP. The primary controller proposes the lower left switch 230c - one of its NRP candidates - and this is accepted by the backup switch. There is no change in the primary/backup roles.

In figure 13, the first control device 220a starts as primary controller and the second control device 220b starts as backup controller. The upper left switch 230a is appointed as NRP. Two network failures 1 and 2 have occurred at the indicated positions, which break the upper path and the lower path between the first control device 220a and the second control device 220b. The double network failure is an example of partitioning, a splitting of the data network 240 into separate components. Despite the network failures, the primary controller can feed control signals to the industrial system 210 over two disjoint paths in the data network 240. When the backup controller notices the absence of heartbeat messages, it tries to contact the NRP. Because the NRP does not respond, the backup controller does not transform into primary controller. (The 'exceptional circumstances' discussed above are not fulfilled, for the network failures 1 and 2 did not occur simultaneously with respect to the time resolution of the timestamps.) In some embodiments, the backup controller is configured to transform into the Startup-Initialization/Waiting state 1710 after determining it is unable to receive the heartbeat signal *and* is unable to reach the NRP; it will transform into the Backup-Supervising state 1720 (backup controller role) once it receives heartbeat signal again. The first control device 220a continues functioning in the Primary-Supervisee mode 1730 (primary controller role) throughout these events.

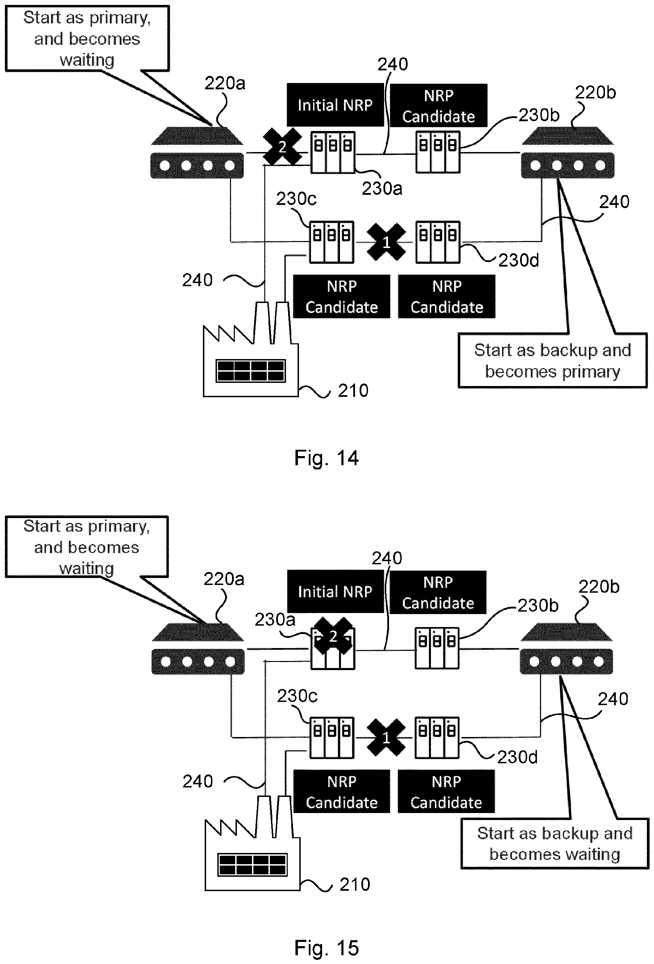

Figure 14 too relates to a scenario with a double network failure, which splits the data network 240 into separate components (partitioning). The first control device 220a starts as primary controller and the second control device 220b starts as backup controller. The upper left switch 230a is appointed as NRP. Two network failures 1 and 2 have occurred at the indicated positions, which break the upper path and the lower path between the first control device 220a and the second control device 220b. The network failure 2 also breaks the path from the primary controller to the NRP. This will be discovered in the primary controller's routine verification of the NRP reachability, after which it will propose a different switch 230 as NRP. However, the lower left switch 230c is the only NRP candidate that the primary controller can reach; it is unreachable by the backup controller, and it will be (implicitly) rejected by the backup controller. As a result, the first control device 220a will transform into Startup-Initialization/Waiting state 1710 and the second control device 220b will transform into Primary-Supervisee mode 1730. As such, until the data network 240 recovers at least partially, the second control device 220b will operate without supervision.

In figure 15, the first control device 220a starts as primary controller and the second control device 220b starts as backup controller. The upper left switch 230a is appointed as NRP. A scenario is considered where the NRP stops functioning and there is a network failure 1 on the lower path between the first control device 220a and the second control device 220b. The primary controller will discover, during its routine verification, that it can no longer reach the NRP, and it will propose a replacement NRP from among the NRP candidates. Again, the lower left switch 230c is the only NRP candidate that the primary controller can reach; it is unreachable by the backup controller, and it will be (implicitly) rejected by the backup controller. As result, the first control device 220a will transform into Startup-Initialization/Waiting state 1710. The second control device 220b functioning as backup controller will discover, on the one hand, that the heartbeat signal is missing on both the upper and lower network path and, on the other hand, that it cannot reach the NRP. The second control device 220b will thus transform into Startup-Initialization/Waiting state 1710 too. The industrial system 210 will operate in accordance with Output Set as Predetermined (OSP) until the network 240 recovers.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims.

## Claims

1. A control device (220) for use with at least one further control device in controlling an industrial system (210), to which the control device and further control device(s) are connected via a data network (240),
wherein the control device is operable to function
- as primary controller (1730), wherein the control device feeds control signals (no) to the industrial system; and
- as a backup controller (1720), wherein the control device routinely performs a failure detection (114) on the primary controller via the data network, and transforms into primary controller in reaction to a positive failure detection,
**characterized in that** the transformation from backup controller into primary controller is conditional upon verifying that a node in the data network acting as network reference point (NRP) responds (118) to a call (116) from the backup controller.

2. The control device (220) of claim 1, wherein:
the control device when functioning as primary controller emits a heartbeat signal (112); and
the control device when functioning as backup controller performs the failure detection by detecting the heartbeat signal.

3. The control device (220) of claim 2, wherein the heartbeat signal includes a stream of timestamped heartbeat messages.

4. The control device (220) of claim 3, wherein the control device when functioning as backup controller, in reaction to detecting a simultaneous interruption of the stream of timestamped heartbeat messages on at least two different paths of the data network (240), transforms into primary controller regardless of whether the NRP responds (118) to the call (116).

5. The control device (220) of any of the preceding claims, wherein the NRP is a node in the data network (240) which has been jointly appointed (128) by the control devices as NRP.

6. The control device (220) of claim 5, further configured to propose (124) to the further control device(s), for appointment (128) as NRP, a node in the data network (240) with which it has no known common cause of failure.

7. The control device (220) of claim 5 or 6, further configured to propose (124) to the further control device(s), for appointment (128) as NRP, a node in the data network (240) which is located on a path from itself to at least one further control device.

8. The control device (220) of any of the preceding claims, wherein the control device when functioning as primary controller routinely verifies (122) that the NRP responds (118) to a call (116) from the primary controller.

9. The control device (220) of claim 8, wherein the control device when functioning as primary controller:
proposes (124), to the backup controller(s), one or more replacement NRPs if the NRP does not respond; and
transforms (130) into backup controller if at least one further control device functioning as backup controller does not accept (126) any of the replacement NRPs.

10. The control device (220) of claim 8 or 9, wherein a periodicity (T1) of failure detection (114) and a periodicity (T3) of verifying (122) that the NRP responds differ by at most a factor 10, preferably differ by at most a factor 5, preferably differ by at most a factor 2, and most preferably are approximately equal.

11. The control device (220) of any of the preceding claims, wherein the call (116) from the backup controller to the NRP is a ping message which is specified, in a protocol executed by the data network (240), to have a bounded response time.

12. The control device (220) of any of the preceding claims, wherein the control device when functioning as backup controller, in reaction to detecting that the NRP does not respond (118) to a call (116) from the backup controller, enters a waiting state (1710).

13. A method of operating an arrangement of redundant control devices (220) in controlling an industrial system (210), to which the control device and further control device(s) are connected via a data network (240), the method comprising:
at a first control device (220a) currently functioning as primary controller, feeding control signals (110) to the industrial system;
at a second control device (220b) currently functioning as backup controller, routinely performing a failure detection (114) on the primary controller;
at the second control device, in reaction to a positive failure detection, making a call (116) to a node of the data network acting as network reference point (NRP); and
at the second control device, deciding (120) to transform into primary controller only if a response (118) from the NRP is received.

14. The method of claim 13, further comprising:
at the first control device (220a) currently functioning as primary controller, routinely verifying (122) that the NRP responds (118) to a call (116) from the primary controller.

15. The method of claim 14, further comprising:
at the first control device (220a) currently functioning as primary controller, in the absence of a response (118) from the NRP, proposing (124) to the backup controller(s) one or more replacement NRPs; and
appointing (128) one of the proposed replacement NRPs jointly by all control devices.

16. The method of claim 14, further comprising:
at the first control device (220a) currently functioning as primary controller, in the absence of a response (118) from the NRP, proposing (124) to the backup controller(s) one or more replacement NRPs; and
at the first control device, if at least one backup controller does not accept (126) the proposed replacement NRP(s), transforming (130) into backup controller.
